# EUROPEAN PATENT APPLICATION

(11) **EP 4 378 677 A1**
(43) Date of publication of application: **05.06.2024**
(21) Application number: 22849534.7
(22) Date of filing: 27.07.2022
(51) Int. Cl.: B32B 1/08, F16L 11/08, F16L 11/12, F04B 43/12, F04C 5/00

(54) **TUBE AND PUMP USING SAME**

(30) Priority: 28.07.2021 JP 2021123759
(71) Applicant: Junkosha Inc., Kasama-shi, Ibaraki 309-1603 (JP)
(72) Inventor: YANAI, Kouichi, Kasama-shi Ibaraki 309-1603 (JP)
(74) Representative: Daub, Thomas
(86) International application number: PCT/JP2022/028910
(87) International publication number: WO 2023/008473

(57) **Abstract**

[Object] To provide a tube having excellent long-term reliability.

[Means for Solution] A tube includes: a flow path that serves as a transport path of a fluid and extends in a first direction; and a main body portion formed around the flow path, the main body portion includes a first layer formed on the flow path and a second layer having a characteristic different from that of the first layer and formed on the first layer, and when an elastic modulus ratio R1 of the first layer is defined as a tensile elastic modulus of the first layer in the first direction / a tensile elastic modulus of the first layer in a circumferential direction, the elastic modulus ratio R1 is larger than 1.

## Description

### TECHNICAL FIELD

The present invention relates to a tube and a pump to be used for fluid transport. In particular, the present invention relates to a tube that is used in a peristaltic device such as a peristaltic pump, and that is useful for controlling the flow of fluid in the tube by deforming the tube, and a pump including such a tube.

### BACKGROUND ART

In recent years, there has been an increasing demand for a tube having excellent durability not only in a chemical industrial plant and a semiconductor manufacturing apparatus, but also in a pharmaceutical factory or a food and beverage factory. Most of conventional tubes are used in a static state, but the manufacturing apparatus is less likely to be moved in order to reduce a manufacturing space and increase the productivity in a unit site, and as a result, the tube itself is variously deformed and used in many cases. In such a case, the tube is required to have mechanical resistance against a repeated stress due to bending, sliding, or twisting.

In another aspect, a peristaltic device such as a peristaltic pump can be exemplified. The tube is deformed by being pressed in a radial direction by a roller in the peristaltic device, and then transports a fluid (for example, a liquid) by a deformation position moving further as the roller moves. In the peristaltic pump, a structure of a flow path can be simplified as compared with other pumps, and there is little risk of contamination of the fluid. Therefore, the peristaltic pump is often used in the fields such as food equipment and medical equipment, and in recent years, the peristaltic pump is also used to transport photoresist when a semiconductor is manufactured.

As the tube used in this type of peristaltic pump, Prior Art Document 1 (JP2002-502735A) discloses a composite material having a plurality of stretched expanded polytetrafluoroethylene layers. The polytetrafluoroethylene layer is impregnated with at least one kind of elastomer, and the impregnated polytetrafluoroethylene layer is bonded together with an elastomer layer.

Prior Art Document 2 (WO2017/094807) discloses a tube including an inner layer made of a porous fluororesin with which a fluorine-based elastomer is impregnated, an intermediate layer made of a fluorine-based elastomer stacked on the inner layer, and an outer layer stacked on the intermediate layer. A tube capable of maintaining the shape recovery property for a long period of time even when transporting an organic solvent is implemented by using a fluorine-based elastomer having a high organic solvent resistance as an inner layer and a silicone rubber having an excellent shape recovery property as an outer layer.

### SUMMARY OF INVENTION

### OBJECT TO BE ACHIEVED BY THE INVENTION

The above-described tube exhibits a higher durability than a tube having a general configuration, but there is a demand for further improvement in durability.

### MEANS FOR ACHIEVING THE OBJECT

In order to achieve the above-described object, for example, a tube having the following configuration is provided. A first tube is a tube to be used for a pump that transports a fluid by peristalsis, the tube includes: a flow path that serves as a transport path of the fluid and extends in a first direction; and a main body portion formed around the flow path, the main body portion includes a first layer formed on the flow path and a second layer having a characteristic different from that of the first layer and formed on the first layer, and when an elastic modulus ratio R1 of the first layer is defined as a tensile elastic modulus of the first layer in the first direction / a tensile elastic modulus of the first layer in a circumferential direction, the elastic modulus ratio R1 is larger than 1.

A second tube is a tube to be used for a pump that transports a fluid by peristalsis, the tube includes: a flow path that serves as a transport path of the fluid and extends in a first direction; and a main body portion formed around the flow path, the main body portion includes a first layer formed on the flow path and a second layer having a characteristic different from that of the first layer and formed on the first layer, the first layer includes a plurality of yarn fibrous materials, and the plurality of yarn fibrous materials of the first layer are preferentially oriented in a direction along the first direction as compared with a direction along the circumferential direction.

### BRIEF DESCRIPTION OF DRAWINGS

Fig. 1 is a diagram illustrating a structure of a tube according to a first embodiment.
Fig. 2 is a diagram illustrating a peristaltic pump including the tube according to the first embodiment.
Fig. 3 is a diagram illustrating a change in shape of the tube in the peristaltic pump illustrated in Fig. 2 in a cross-sectional view.
Fig. 4 is a diagram illustrating a microscopic phenomenon occurring in the tube during the operation of the pump.
Fig. 5 is an enlarged view of a region RG1 and a region RG2 illustrated in Fig. 1.
Fig. 6 is a schematic diagram illustrating an example of a configuration of a base material of the tube according to the first embodiment.
Fig. 7 is a diagram illustrating an example of orientation confirmation by observing the base material.
Fig. 8 is a flowchart illustrating a tube manufacturing method according to the first embodiment.
Fig. 9 is a diagram illustrating an example of a method for measuring a tensile elastic modulus of a layer constituting a tube.

### EMBODIMENTS FOR CARRYING OUT THE INVENTION

Hereinafter, an embodiment of a tube according to the present invention will be described. The embodiment to be described later does not limit the invention according to the claims, and not all combinations of features to be described in the embodiment are essential to the solution means of the invention. In addition, the respective embodiments in the respective examples may be freely combined without losing the technical significance of the present invention.

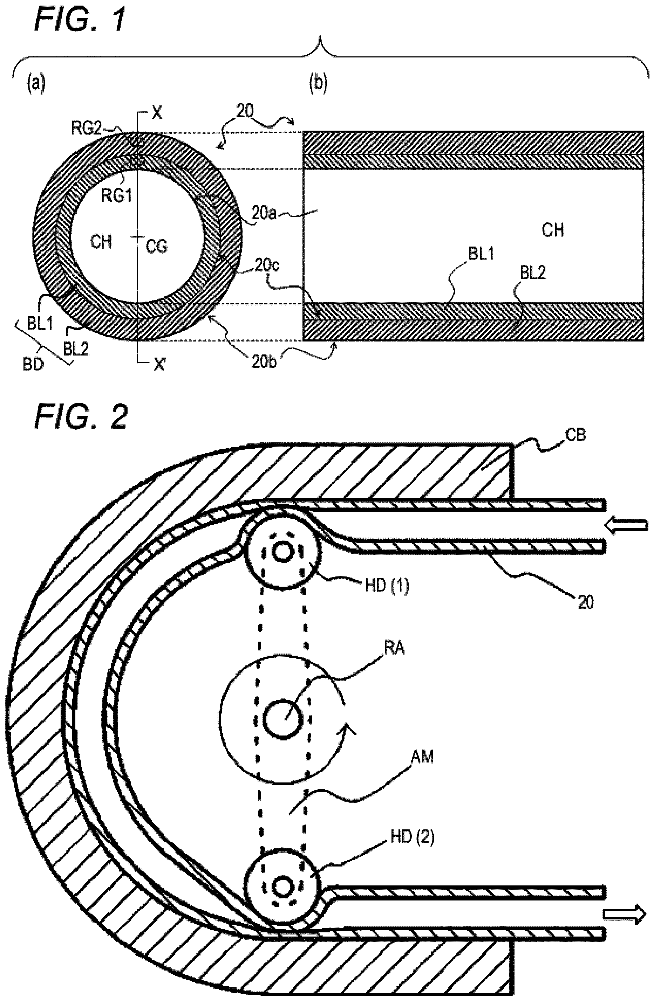

A first embodiment will be described with reference to (a) of Fig. 1 and (b) of Fig. 1. (a) of Fig. 1 is a diagram illustrating a cross-sectional structure of a tube 20 according to a first embodiment in a surface perpendicular to a longitudinal direction of the tube 20, and (b) of Fig. 1 is a diagram illustrating a cross-sectional structure of the tube 20 in a surface parallel to the longitudinal direction of the tube 20 at a position indicated by X-X' in (a) of Fig. 1.

As illustrated in (a) of Fig. 1, the tube 20 includes a flow path CH therein, and a main body portion BD of the tube 20 surrounds the flow path CH. The main body portion BD includes an inner peripheral surface 20a defining the flow path CH and an outer peripheral surface 20b opposite to the inner peripheral surface.

As illustrated in (b) of Fig. 1, the flow path CH is continuously formed along the longitudinal direction of the tube 20, that is, a left-right direction in a paper surface of (b) of Fig. 1. The flow path CH serves as a transport path of a fluid through which the fluid taken in from one end of the tube 20 can move to the other end of the tube.

The main body portion BD includes an inner layer (first layer) BL1 formed on the flow path CH and an outer layer (second layer) BL2 formed to surround the outer periphery of the inner layer BL1.

In the present embodiment, the inner layer BL1 includes the inner peripheral surface 20a on which the inner layer BL1 comes into contact with a fluid to be transported. The outer layer BL2 surrounds the inner layer BL1 on a surface 20c of the inner layer BL1 opposite to the inner peripheral surface 20a. The inner layer BL1 and the outer layer BL2 are stacked in a radial direction of the tube, and for example, relative positions thereof are fixed to each other by adhesion or welding.

Here, directions in the present specification will be described with reference to (a) of Fig. 1. The radial direction is a direction represented as a virtual straight line (not shown) passing through a center CG of the flow path CH on a surface perpendicular to an extending direction of the flow path CH (hereinafter, the extending direction of the flow path CH is referred to as a first direction). When a cross-sectional shape of the flow path is not circular, a centroid position of the cross-sectional shape of the flow path may be regarded as the center CG. A size in the radial direction is a distance between two points on the virtual straight line. For example, a thickness of a certain layer in the tube is defined as a distance between two intersections located at positions at which one interface and the other interface of the layer intersect the virtual straight line. The bending in the radial direction is one form of the change in tube shape on the surface perpendicular to the first direction. For example, a curvature of each layer of the tube illustrated in (a) of Fig. 1 and the deformation in which a distance from any point on each layer to the center CG is partially changed (typically, the deformation in which a circular tube cross section is squeezed in an elliptical shape) include the bending of the inner layer BL1 and the outer layer BL2 in the radial direction.

On the other hand, for example, a direction in which the inner layer BL1 and/or the outer layer BL2 extends on the surface perpendicular to the first direction or a direction along the inner peripheral surface 20a and/or the outer peripheral surface 20b are referred to as a circumferential direction. For example, the expansion of the tube due to an increase in pressure of an internal fluid can be considered to be accompanied by the expansion of a cross-sectional area of the flow path CH on the surface perpendicular to the first direction, and such deformation can be considered to be accompanied by the expansion of the inner layer BL1 and the outer layer BL2 in the circumferential direction.

In the present embodiment, the inner layer BL1 and the outer layer BL2 of the tube 20 have different characteristics from each other. Thus, the inner layer BL1 and the outer layer BL2 have different physical characteristics and/or chemical characteristics. Examples of such characteristic include a mechanical characteristic, a chemical characteristic, an optical characteristic, and a thermal characteristic. The performance and quality required for the tube can be implemented by having different constituent materials and/or structures between the layers and by expressing the characteristic required for each of the inner layer and the outer layer.

For example, by making a material constituting the inner layer more chemically and thermally stable than a material constituting the outer layer, it is possible to reduce the deterioration of the tube due to an attack on the inner layer by the fluid to be transported or the contamination of the fluid to be transported due to elution of a component derived from the material of the inner layer. The material of the outer layer is a material having a wider elastic region than the material of the inner layer, and thus it is possible to obtain a tube that is resistant to fatigue and breaking associated with the fatigue even in an environment in which repeated deformation is repeated for a long period of time. When the material of the outer layer is superior in wear resistance to the material of the inner layer, the wear deterioration due to mechanical contact with a pump main body can be reduced. Alternatively, the visibility of the fluid in a transport state can be improved by applying a material having a high light transmittance in a visible light region to a layer having a relatively large thickness, or an effect of sterilizing the inside of the tube with an ultraviolet can be improved by using a material having a high ultraviolet transmittance.

As described above, by appropriately combining two or more layers having different characteristics from each other, it is possible to implement a tube having a performance that is difficult to reach only by repeating a single layer or a specific structure.

The difference in characteristics described above refers to a difference in characteristics or the like caused by applying materials having essentially different characteristics or caused by a difference in structure provided intentionally. Typically, the difference in characteristics described above refers to a state in which, when a certain characteristic value is acquired in each of the inner layer and the outer layer, there is a significant difference between an acquired value in the inner layer and an acquired value in the outer layer.

The inner layer BL1 of the tube 20 according to the present embodiment has specific anisotropy of a tensile elastic modulus. Thus, when an elastic modulus ratio R is expressed by the following formula (1), an elastic modulus ratio R1 of the inner layer is larger than 1. Elastic modulus ratio R = tensile elastic modulus in first direction / tensile elastic modulus in circumferential direction

Thus, when the elastic modulus ratio R1 of the inner layer is larger than 1, the tensile elastic modulus of the inner layer BL1 in the first direction is larger than 1 time the tensile elastic modulus of the inner layer BL1 in the circumferential direction.

As described above, the tube according to the present embodiment includes the inner layer and the outer layer having different characteristics from each other, and the inner layer has a characteristic configuration in which the tensile elastic modulus in the first direction is larger than the tensile elastic modulus in the circumferential direction. Accordingly, a tube having durability significantly improved even in an extremely severe use environment such as a peristaltic pump can be provided.

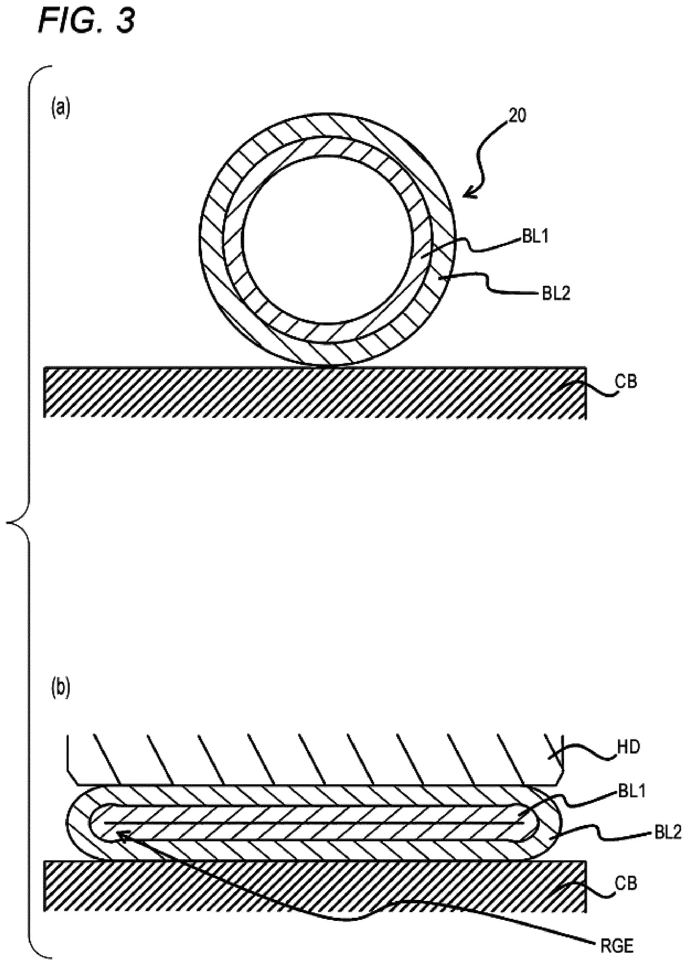

The peristaltic pump using the tube 20 according to the present embodiment and an operation thereof will be described with reference to Figs. 2 and 3. Fig. 2 schematically illustrates a mechanism portion of the peristaltic pump using the tube 20 according to the present embodiment. The peristaltic pump includes a case CB, and the tube 20 is disposed along an inner surface of the case CB. The peristaltic pump further includes a rotation portion that rotates by being driven by a rotation axis RA. The rotation portion includes a support portion AM which is fixed to the rotation axis RA and is indicated by a broken line, and one or more heads HD which are formed at an end of the support portion AM. The head HD moves along the inner surface of the case CB as the rotation portion rotates in a direction of an arrow indicated by a solid line in Fig. 2. From the viewpoint of reducing a damage to a surface of the tube, the head HD is preferably provided as a rotatable roller. A size of a gap between the head HD and the inner surface of the case CB is smaller than twice a thickness of the main body portion of the tube 20. The tube 20 is sandwiched and squeezed between the head HD and the case CB at a position at which the head HD and the case CB face each other. As a result, a closed region in which an area of the flow path CH is substantially zero is formed at the same position of the tube 20.

The head HD is moved by the rotation operation of the rotation portion, and the closed region is also moved in accordance with the movement of the head HD, whereby the fluid in the tube is transported. In the example illustrated in Fig. 2, the rotation portion rotates counterclockwise on a paper surface, and thus the fluid in the flow path of the tube is transported in a direction indicated by a white arrow. Although not shown, one end of the tube is connected to a supply source (for example, a liquid storage tank or a pipe connected thereto) of the fluid to be transported, and the other end of the tube is connected to a supply destination (for example, a treatment tank or a pipe connected thereto) of the fluid to be transported.

(a) of Fig. 3 and (b) of Fig. 3 illustrate changes in a cross-sectional shape of the tube 20 located at a certain position in the peristaltic pump on the surface perpendicular to the first direction. As illustrated in (a) of Fig. 3, before the head HD reaches the position, that is, when a pressure from the head HD is not applied to the tube 20, the tube 20 has a substantially circular cross-sectional shape. The tube 20 includes the inner layer BL1 and the outer layer BL2, and includes a large internal space serving as the flow path CH inside the inner layer BL1. Thereafter, when the head HD reaches the position, as illustrated in (b) of Fig. 3, the tube 20 is sandwiched and squeezed between the case CB and the head HD to form the closed region. When the head HD further moves away from the position, the tube 20 returns to the shape illustrated in (a) of Fig. 3 again by its own shape recovery force. Such a large deformation in the radial direction repeatedly occurs in the tube 20 inside the case CB of the peristaltic pump during the operation. Therefore, the tube 20 is required to have flexibility (shape recovery property) by which no irreversible deformation occurs even under the large deformation, a shape recovery force by which the tube 20 quickly returns its original shape when an external force is removed, and durability that is not broken even when the operation of reciprocating between the squeezed shape and the original shape is repeated for a long period of time.

However, these characteristics include those in a trade-off relation, and for example, the reality is that it is difficult to achieve the overall excellent performance of the tube by simply selecting a material or the like, such as a flexible material that is likely to secure the durability but is less likely to obtain a shape recovery force. In order to improve the durability of a multilayer tube that achieves a desired performance, the present inventors studied an external stress applied to the tube by a pumping operation and a resulting deformation occurring in the tube. As a result, the macroscopically repeated deformation occurring in the tube was roughly classified into the following three types.

The first one is a deformation formed by bending the tube in the radial direction, and is recognized as a deformation that reciprocates between the shapes of (a) of Fig. 3 and (b) of Fig. 3. The second one is the expansion and contraction of the tube in the longitudinal direction (that is, the first direction) of the tube that occurs as the head HD moves. The third one is the expansion of a flow path volume due to a pressure of the fluid in the tube and contraction of the flow path volume after the pressure is released, and includes the expansion and contraction of the tube in the longitudinal direction and the expansion and contraction of each layer constituting the tube in the circumferential direction.

Based on the above, it is considered that the following is preferable for the tube applied to the peristaltic pump. First, an amount of deformation is considered to be maximum, and it is necessary to secure an elastic region having a size equal to or larger than a certain value for the deformation of the tube in the radial direction, which is indispensable for a fluid transport operation. On the other hand, it is preferred to ensure an elastic modulus by which the amount of deformation can be reduced to a certain value or less for the expansion and contraction of the tube in the longitudinal direction and the circumferential direction, which is not necessary for the fluid transport operation.

In addition to the study of such a macroscopic deformation, the present inventors also studied a microscopic deformation. In particular, the present inventors have focused attention on an end of a closed surface, which is considered to have a large internal stress locally, and have endeavored to understand a microscopic behavior at the time of operation. Here, the end of the closed surface refers to an end of a contact surface formed by opposing inner peripheral surfaces coming into contact with each other when the tube is squeezed and closed between the head HD and the case CB. In a cross-sectional view, the end of the closed surface corresponds to, for example, a position indicated by reference sign RGE in (b) of Fig. 3. The study of the microscopic deformation includes preparation of a clamp jig for reproducing a tube deformation in a pump on an observation stage of a microscope, microscopic observation of the tube deformation reproduced by the clamp jig, and the like. As a result of the study, two phenomena that can affect the durability and the reliability of the tube are found.

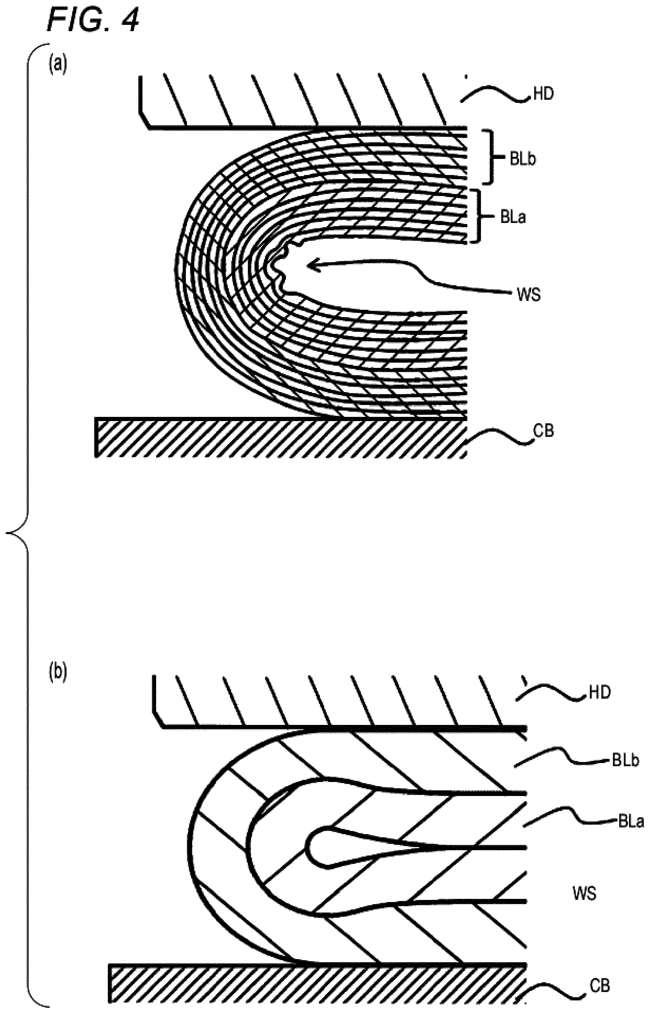

(a) of Fig. 4 and (b) of Fig. 4 are diagrams illustrating a microscopic deformation occurring in the tube during the operation of the pump. (a) of Fig. 4 and (b) of Fig. 4 illustrate the vicinity of the end of the closed surface in a cross section perpendicular to the first direction in an enlarged manner.

As illustrated in (a) of Fig. 4, the present inventors have found that when the tube is squeezed in the peristaltic pump, a wavy shape WS is generated on the inner peripheral surface of the inner layer at the end of the closed surface. (a) of Fig. 4 illustrates a state immediately before complete closure to make the figure easier to see, and the wavy shape is also generated in the complete closure state. A plurality of minute curves having a very small curvature are generated in the vicinity of a peak of each wave of the wavy shape, and thus it is presumed that a large stress is locally generated here. In a life test, the occurrence of a crack growing from the inner peripheral surface toward the outer peripheral surface is confirmed in the vicinity of the end of the closed surface based on a failure analysis of the tube in an early stage of fracture, and it is presumed that the wavy shape strongly relates to the formation of a starting point of the crack.

In examining the details of the wavy shape, it is useful to observe a tube in which the inner layer and the outer layer are constituted as a multilayer structure in which a plurality of base materials are stacked. In (a) of Fig. 4, the tube includes an inner layer BLa and an outer layer BLb. A plurality of solid lines extending in the circumferential direction in each layer indicate the stacked base materials. By the microscopic observation of the shape of the base material, it is confirmed that the wavy shape WS extends in a thickness direction of a main body portion of the tube while gradually decreasing an amplitude toward the outer periphery, instead of a phenomenon of a surface of the innermost periphery (surface coming into contact with the fluid). In addition, in principle, the wavy shape converges in the inner layer BLa, and no clear wavy shape extending to the outer layer BLb is found.

The present inventors considered that the wavy shape was generated as follows. When the tube is sandwiched and squeezed between the head HD and the case CB, the inner layer BLa surrounded by the outer layer BLb has an excessive length in the circumferential direction, and thus the excessive length can be absorbed by the deformation that reduces the length in the circumferential direction, that is, the contraction in the circumferential direction. As the tube is further squeezed, the excessive length is further increased, and cannot be completely absorbed only by the contraction in the circumferential direction. As a result, a layer closer to the inner peripheral surface having the largest excessive length in the inner layer BLa has a more remarkable wavy shape, thereby absorbing the excessive length.

In order to reduce the generation of the wavy shape and/or in order to reduce the internal stress or material fatigue due to the wavy shape, it is considered to be useful to form the inner layer of a material having a small elastic modulus and a wide elastic region. However, when a material is simply replaced with such a material, the above-described macroscopic deformation becomes large. When the elastic modulus of the tube decreases, for example, an amount of expansion and contraction of the tube in the tube longitudinal direction by the operation of the head HD increases. Alternatively, the amount of deformation of the tube due to the pressure fluctuation of the fluid to be transported increases. Even when the wavy shape is reduced, an increase in the amount of deformation due to other mechanisms may deteriorate the durability of the tube.

On the other hand, the tube 20 according to the present embodiment includes the inner layer and the outer layer, and the inner layer has a characteristic configuration in which the tensile elastic modulus in the first direction is larger than the tensile elastic modulus in the circumferential direction. Thus, the inner layer in which the wavy shape is remarkably generated has the anisotropy of the tensile elastic modulus, and the anisotropy is obtained by relatively reducing the tensile elastic modulus in the circumferential direction in which the effect of reducing the generation of the wavy shape or the like is expected while ensuring the tensile elastic modulus in the first direction in which an effect of reducing the expansion and contraction of the tube in the longitudinal direction is obtained. With such a configuration, it is considered that it is possible to effectively reduce the wavy shape in the inner layer of the tube while reducing the influence on other mechanical characteristic of the tube. As a result, the tube having durability significantly improved even in an extremely severe use environment such as a peristaltic pump is provided.

The elastic modulus ratio R1 of the inner layer may be larger than 1, and is more preferably larger than 1.2. In this way, when a large variation occurs in the anisotropy of the tensile elastic modulus of the inner layer due to a variation at the time of manufacturing, a difference in a use environment, a change with time during use, or the like, the above-described effect can also be stably obtained.

The elastic modulus ratio R1 of the inner layer is particularly preferably larger than 2. In order to obtain a desired performance of the tube, it is often impossible to select the most advantageous material or configuration for the inner layer or the outer layer in terms of durability. In such a case, the tube having sufficiently improved durability can be obtained by setting the elastic modulus ratio R1 of the inner layer to 2 or more.

The elastic modulus ratio R2 of the outer layer of the tube 20 according to the present embodiment, that is, a value obtained by dividing the tensile elastic modulus of the outer layer in the first direction by the tensile elastic modulus of the outer layer in the circumferential direction can be smaller than the elastic modulus ratio R1 of the inner layer. When it is only a countermeasure for the wavy shape, an effect can be expected by increasing the elastic modulus ratio R2 of the outer layer as well as the elastic modulus ratio R1 of the inner layer, but originally, the wavy shape is less likely to extend to the outer layer, and thus a direct effect on the wavy shape cannot be obtained as much as the elastic modulus ratio R1 of the inner layer. On the other hand, when the tensile elastic modulus of the entire tube in the circumferential direction excessively decreases, the expansion and contraction of the tube in the circumferential direction due to the pressure fluctuation of the internal fluid may increase. On the other hand, by making the elastic modulus ratio R2 of the outer layer smaller than the elastic modulus ratio R1 of the inner layer, it is possible to obtain a tube in which such an increase in risk can be prevented.

In the tube in which the tensile elastic modulus of the outer layer BLb in the circumferential direction is excessively small, another problem may occur. As illustrated in (b) of Fig. 4, in the microscopic observation, it is confirmed that in the tube in which the tensile elastic modulus of the outer layer BLb in the circumferential direction is decreased by a certain value or more, a gap is more likely to be generated at the end of the closed surface even in the same gap, as compared with a tube in which a tensile elastic modulus of the outer layer BLb in the circumferential direction is not decreased. Here, the gap is a distance between the head HD and the case CB. In this way, when there remains the gap and the closure is incomplete, it is difficult to appropriately transport a fluid, and a necessary amount of transport cannot be secured. It is possible to create a closed state again by decreasing a size of the gap between the head HD and the case CB and increasing the pressure applied to the tube, but in the method, the amount of deformation of the tube during use becomes large, and the durability may be deteriorated, for example, a larger pressure than an original state is applied to a region other than the end at which the gap is generated.

The phenomenon is presumed to be caused by the fact that, when the tube is in a squeezed state as illustrated in (a) of Fig. 4, the outer layer BL2 on the outer peripheral side of the tube is largely expanded, and a layer thickness of the region is reduced. As a result, the pressure applied from the head HD or the case CB is less likely to be transmitted to the inner layer BL1, and the insufficient closure is likely to occur.

On the other hand, the elastic modulus ratio R2 of the outer layer can be smaller than 1. Thus, the tensile elastic modulus of the outer layer BL2 in the circumferential direction may be larger than one time the tensile elastic modulus of the outer layer BL2 in the first direction. Originally, a risk of occurrence of a wavy shape of the outer layer BL2 is smaller than that of the inner layer BL1. Therefore, in contrast to the inner layer, by positively reducing the expansion of the outer layer in the circumferential direction, it is possible to improve a closure property when squeezed. As a result, the tube having both performance and durability can be implemented.

In particular, when the elastic modulus ratio R1 of the inner layer is larger than 1, the elastic modulus ratio R2 of the outer layer is preferably smaller than 1. In the configuration in which the elastic modulus ratio R1 of the inner layer is larger than 1, when the pressure fluctuation of the fluid is large, the expansion and contraction in the circumferential direction may not be sufficiently prevented by the mechanical characteristic of the inner layer alone. In such a case, when the outer layer having the elastic modulus ratio R2 smaller than 1 is provided, the outer layer can prevent the expansion and contraction of the entire tube in the circumferential direction.

For the same reason, when the elastic modulus ratio R1 of the inner layer is larger than 1.2, the elastic modulus ratio R2 of the outer layer is more preferably smaller than 1, and when the elastic modulus ratio R1 of the inner layer is larger than 2, the elastic modulus ratio R2 of the outer layer is particularly preferably smaller than 1.

In each of the above-described cases, the elastic modulus ratio R2 of the outer layer is more preferably smaller than 0.9, and particularly preferably smaller than 0.8. In this way, when the elastic modulus ratio R2 includes a variation at the time of manufacturing, a variation under a use environment, or the like, a stable effect can also be obtained.

Examples of a method of providing the inner layer BL1 and/or the outer layer BL2 having the anisotropy of the tensile elasticity in the first direction and the circumferential direction include controlling an orientation of a material constituting a layer. For example, a thin sheet-shaped member having enhanced anisotropy can be obtained by increasing a drawing ratio of the sheet-shaped member at the time of extrusion and further stretching the extruded sheet-shaped member one or more times in the same direction as at the time of extrusion. By stacking the sheet-shaped members thus obtained while winding the same in a predetermined direction with respect to the first direction of the tube, predetermined anisotropy can be expressed in any layer of the tube.

Alternatively, the inner layer BL1 and/or the outer layer BL2 may be constituted as a composite of two or more materials having different elastic modulus, and the anisotropy may be expressed by controlling a shape or an arrangement of each material. For example, reinforcing fibers having an elastic modulus higher than that of a resin phase serving as a matrix phase may be dispersed in the layer. By imparting a desired orientation to such reinforcing fibers, a layer having strong and stable anisotropy can be formed. Although the details will be described later, it is particularly preferred that the inner layer and/or the outer layer include a sheet-shaped base material extending in the same direction as the respective layers, and the base material has anisotropy. The anisotropy of the layer thus obtained is further strong, stable, and excellent in uniformity.

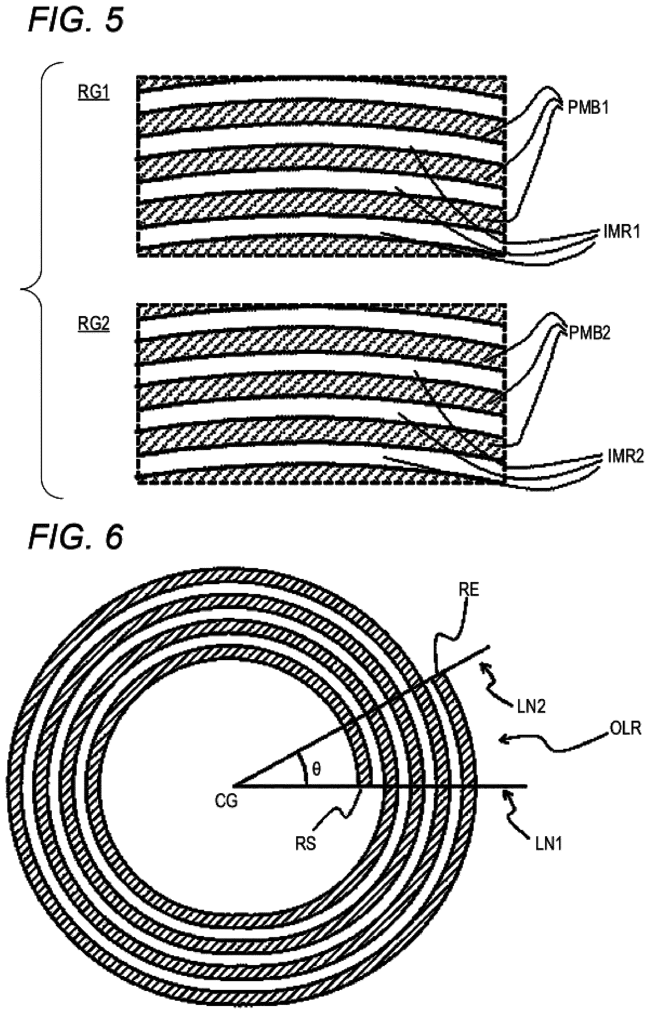

An example of a more detailed structure of the tube 20 according to the first embodiment will be described with reference to Fig. 5. A first region RG1 is a partial region inside the inner layer BL1. Here, a region indicated by a rectangular broken line in the inner layer BL1 in (a) of Fig. 1 is illustrated. In the present embodiment, the first region RG1 includes first base material layers PMB1. The first base material layers PMB1 are fixed to one another via first resin layers IMR1. The first base material layers PMB1 and the first resin layers IMR1 extend in the circumferential direction of the tube 20. In the present embodiment, the first region RG1 includes a plurality of first base material layers and a plurality of first resin layers, and is constituted as a stacked body in which the base material layers and the resin layers are alternately stacked. The first base material layer is preferably formed of a base material made of a material having an elastic modulus larger than that of a first resin forming the first resin layer. A large pressure may be applied to the main body of the tube applied to the pump from the flow path toward the outer periphery due to the fluid to be transported. When a tube diameter expands due to the pressure, the quantitativeness of an amount of transport may deteriorate and a service life may be shortened. The inner layer has the base material extending in the circumferential direction therein, and thus the tube diameter can also be prevented from being expanded in the presence of a large internal pressure.

A second region RG2 is a partial region inside the outer layer BL2. Here, a region indicated by a rectangular broken line in the outer layer BL2 in (a) of Fig. 1 is illustrated. In the present embodiment, the second region RG2 includes second base material layers PMB2. The second base material layers PMB2 are fixed to one another via second resin layers IMR2. The second base material layers PMB2 and the second resin layers IMR2 extend in the circumferential direction of the tube 20. In the present embodiment, the second region RG2 includes a plurality of second base material layers and a plurality of second resin layers, and is constituted as a stacked body in which the base material layers and the resin layers are alternately stacked. For the same reason as the first region RG1, the second base material layer is preferably formed of a base material made of a material having an elastic modulus larger than that of a second resin forming the second resin layer.

In the present embodiment, a porous base material having a large number of micropores can be applied as the base material constituting the first base material layer. The first resin preferably enters the micropores. Similarly, a porous base material having a large number of micropores can be applied as the base material constituting the second base material layer. The second resin preferably enters the micropores. In such a configuration, not only an area of a bonding interface between the porous base material and the resin can be increased, but also a structure in which the porous base material and the resin are intricately intertwined can be obtained, and thus a large interlayer bonding strength can be obtained. Furthermore, by setting a density of the micropores to 5 × 104 pores/mm2 or more in a plan view on a cross section or a surface of the porous base material, it is possible to prevent stress concentration in a specific region even in a state in which a larger internal stress is generated due to the deformation.

Fig. 6 is a diagram schematically illustrating an example of a formation state of a base material constituting the first base material layer PMB1 in the inner layer BL1 in the cross section perpendicular to the first direction. In Fig. 6, the first resin IMR1 and the outer layer BL2 are not shown.

The base material constituting the first base material layer PMB1 of the tube has a spiral shape in a cross-sectional view as illustrated in Fig. 6. Such a configuration can be more easily obtained by winding one sheet of the base material a plurality of times. The base material includes a starting point RS and an ending point RE at both ends thereof. If the base material is wound from a flow path CH side, the starting point RS corresponds to a winding start, and the ending point RE corresponds to a winding end of a winding step of the base material. In the cross-sectional view, the base material has a shape that revolves around the center CG while gradually increasing a radius from the starting point RS to the ending point RE, and is constituted seamlessly and integrally from the starting point RS to the ending point RE.

In such a configuration, an overlapping region OLR is generated. The overlapping region is a region in which the number of base material layers is larger than another region. For example, the inner layer illustrated in Fig. 6 includes an overlapping region including five base material layers and the other region including four base material layers.

Here, in the cross-sectional view, a virtual straight line passing through the center CG of the flow path of the tube and the starting point RS is defined as a straight line LN1, and a virtual straight line passing through the center CG of the flow path of the tube and the ending point RE is defined as a straight line LN2. Further, an angle θ at a position facing the overlapping region OLR of angles formed by the straight lines LN1 and LN2 is defined as an included angle θ (degrees). The number of windings and the like are not considered, and thus the included angle θ is defined in a range of 0 degrees or more and less than 360 degrees. The included angle θ may be defined as a size of a central angle of a fan shape formed by the overlapping region and the center CG of the flow path. The included angle θ of the first base material layer is preferably 270 degrees or less, more preferably 60 degrees or less, and particularly preferably 30 degrees or less.

The above-described configuration has been described based on the first base material layer of the inner layer, but the same configuration can also be applied to the outer layer. Thus, the base material constituting the second base material layer PMB2 of the tube has a spiral shape in the cross-sectional view similar to the first base material layer illustrated in Fig. 6, and includes the starting point RS and the ending point RE of the second base material layer at both ends thereof. The base material is constituted seamlessly and integrally from the starting point RS to the ending point RE, and the outer layer includes the overlapping region OLR of the second base material layer having a larger number of base materials than other regions. The overlapping region of the first base material layer and the overlapping region of the second base material layer may be disposed at positions not overlapping in the circumferential direction. With one or more of these configurations, it is possible to improve the uniformity of the wall thickness and mechanical characteristic of the main body portion of the tube.

The number of layers is two as the first embodiment, and is not limited thereto. For example, as a third layer, a chemically stable liquid contact layer may be provided at a position at which the liquid contact layer comes into contact with the fluid inside the inner layer, an adhesive layer may be provided between the inner layer and the outer layer, or a surface protective layer may be provided on an outer surface of the outer layer. The liquid contact layer, the adhesive layer, and/or the surface protective layer (hereinafter referred to as the third layer, and the third layer is not shown) may be constituted by a composite material including a porous base material layer and a resin layer, and the composite material may not include a porous base material layer as long as each auxiliary layer has characteristics according to the purpose of formation. For example, the shape recovery property, the shape recovery force, or the deformation prevent characteristics such as the expansion and contraction of the third layer itself may be poor as compared with the inner layer BL1 and the outer layer BL2. In such a case, by making a thickness (that is, the size in the radial direction) of the third layer smaller than that of the inner layer or the outer layer, it is possible to maintain desired mechanical characteristic in the entire tube. For example, a liquid contact layer that has chemical stability equal to or higher than that of the first resin layer IMR1 of the inner layer BL1, is thinner than the inner layer BL1, and does not contain a porous base material may be further provided on an inner peripheral surface side of the inner layer BL1.

A bending elastic modulus of the outer layer BL2 in the radial direction may be smaller than a bending elastic modulus of the inner layer BL1 in the radial direction. With such a configuration, for example, when a material having a high elastic modulus is applied to the inner layer BL1 according to a request for the chemical characteristic or the like, the shape recovery property and the durability of the entire tube can also be improved.

A size in the radial direction of a region including the second base material layer and the second resin layer may be larger than a size in the radial direction of a region including the first base material layer and the first resin layer. When a layer having high flexibility and a small elastic modulus is formed thickly, the internal stress during deformation can be relatively prevented from increasing.

An average distance between base materials of the region including the second base material layer and the second resin layer may be larger than an average distance between base materials of the region including the first base material layer and the first resin layer. A distance between base materials is a distance in the radial direction between thickness centers of the respective base materials between the base materials adjacent in a vertical direction at the time of stack. The average distance between base materials is an average value of the distance between the base materials in the stacked body including four or more base material layers.

### (Base Material)

The base material constituting the first base material layer and/or the second base material layer is made of, for example, a resin, and has high flexibility. A plurality of micropores are preferably formed on the surface and/or from the surface to the inside. The resin forming the resin layer provided between the base material layers enters the micropores, it is possible to ensure a bonding strength that can withstand a large internal stress during a severe deformation such that the tube applied to the peristaltic pump is exposed. An average diameter of the micropores in the plan view is preferably 1 mm or less, and more preferably 1 µm (micrometer) or less. The micropores may be formed at least on the surface of the base material, but preferably communicate with each other in a depth direction.

Examples of such a base material include a woven fabric and a nonwoven fabric made of fibers of a polymer material. A porous structure may be obtained by foaming and stretching the sheet-shaped base material. The formation of micropores by foaming or stretching is preferred because an extremely small diameter or a high porosity can be easily obtained.

The resin forming the resin layer is not limited to a specific resin, is preferably a fluororesin, and specific examples thereof include a polytetrafluoroethylene (PTFE), a tetrafluoroethylene-hexafluoropropylene copolymer resin (FEP), a tetrafluoroethylene-perfluoroalkyl vinyl ether copolymer resin (PFA), a tetrafluoroethylene-hexafluoropropylene-perfluoroalkyl vinyl ether copolymer resin (EPE), an ethylene-tetrafluoroethylene copolymer resin (ETFE), a tetrafluoroethylene-hexafluoropropylene-vinylidene fluoride copolymer resin (THV), a polychlorotrifluoroethylene resin (PCTFE), an ethylene-chlorotrifluoroethylene copolymer resin (ECTFE), a polyvinylidene fluoride resin (PVdF), and a polyvinyl fluoride resin (PVF).

From the viewpoint of the mechanical characteristic and the chemical resistance, polyester resins represented by polyethylene terephthalate (PET) and polyethylene naphthalate (PEN), polyarylate resins represented by polyether ether ketone (PEEK), high molecular weight polyethylene and polyaramid, and even polyimide resins are also preferred.

When the inner layer BL1 or the outer layer BL2 contains such a base material, the anisotropy of the tensile elastic modulus of the layers can be easily controlled by the anisotropy of the contained base material. For example, when the base material is a woven fabric, the base material layer having the anisotropy can be obtained by providing a difference in one or more of density, number, elastic modulus, and strength between warps and wefts, or applying a well-known weaving method with anisotropy in stretchability. The anisotropy of the base material is also reflected in the resin layer-forming base material obtained by impregnating the base material layer with a resin having low elasticity. A tube having anisotropy of the tensile elasticity between the first direction and the circumferential direction can be obtained by using such a resin layer-forming base material.

When the base material is a nonwoven fabric or when a porous structure is obtained by foaming and stretching the sheet-shaped base material, the anisotropy can be expressed in the base material by providing the base material with orientation. Similar to the woven fabric, a resin layer-forming base material reflecting the anisotropy can be obtained by using a base material having such anisotropy. A tube having anisotropy of a tensile elastic modulus between the first direction and the circumferential direction can be obtained by using the resin layer-forming base material.

The present specification also includes the following inventions. That is,
a tube to be used for a pump that transports a fluid by peristalsis includes: a flow path that serves as a transport path of the fluid and extends in a first direction; and a main body portion formed around the flow path, the main body portion includes a first layer formed on the flow path and a second layer having a characteristic different from that of the first layer and formed on the first layer, the first layer includes a plurality of yarn fibrous materials, and the plurality of yarn fibrous materials of the first layer are preferentially oriented in a direction along the first direction as compared with a direction along the circumferential direction.

In the tube in which the fibrous materials are oriented as described above, with such a configuration, it is considered that it is possible to effectively reduce the wavy shape in the inner layer of the tube while reducing the influence on other mechanical characteristic of the tube. As a result, the tube having durability significantly improved even in an extremely severe use environment such as a peristaltic pump is provided.

In the present embodiment, the base material includes the fibrous materials made of a yarn compound. It is preferred that the fibrous material itself has flexibility, and it is preferred that the fibrous material is made of a material having an elastic modulus higher than that of a resin layer between the fiber materials. Examples of the fibrous material include fibers constituting a woven fabric or a nonwoven fabric. Alternatively, the fibrous material may be fibers made of a polymer resin extending between pores of a porous structure formed by foaming and stretching a sheet-shaped base material. Alternatively, the fibrous material may be a resin yarn made of a polymer material dispersed in a resin. Such a resin yarn preferably has an aspect ratio of 5 or more, more preferably 10 or more.

The fibrous materials may be arranged apart from each other, but it is preferred that the fibrous materials are arranged in a state in which at least a half of the fibers are entangled with each other in a partial region, and it is more preferred that the fibrous materials are arranged in a state in which at least a half of the fibers are connected with each other in a partial region.

The preferential orientation can be known by observing the fibers forming the base material. For example, the preferential orientation can be known by cutting out an observation sample from each layer constituting the tube and performing observation using a laser microscope, a scanning electron microscope (SEM), or the like from a direction perpendicular to an extending surface of the base material. Prior to the observation, as necessary, the fibrous material may be exposed on an observation surface by selectively etching and removing the resin layer formed on the base material while minimizing the attack on the base material. When selective etching is difficult, the fibrous material may be exposed by using a physical method such as microtome or polishing. When the base material has higher heat resistance or oxidation resistance than the resin layer, it is also possible to improve the selective removability of the resin layer by using a heat treatment or a combination of the heat treatment and the chemical/physical method. For example, in a stretched PTFE sheet impregnated with a silicone resin, the silicone resin can be selectively removed using concentrated sulfuric acid.

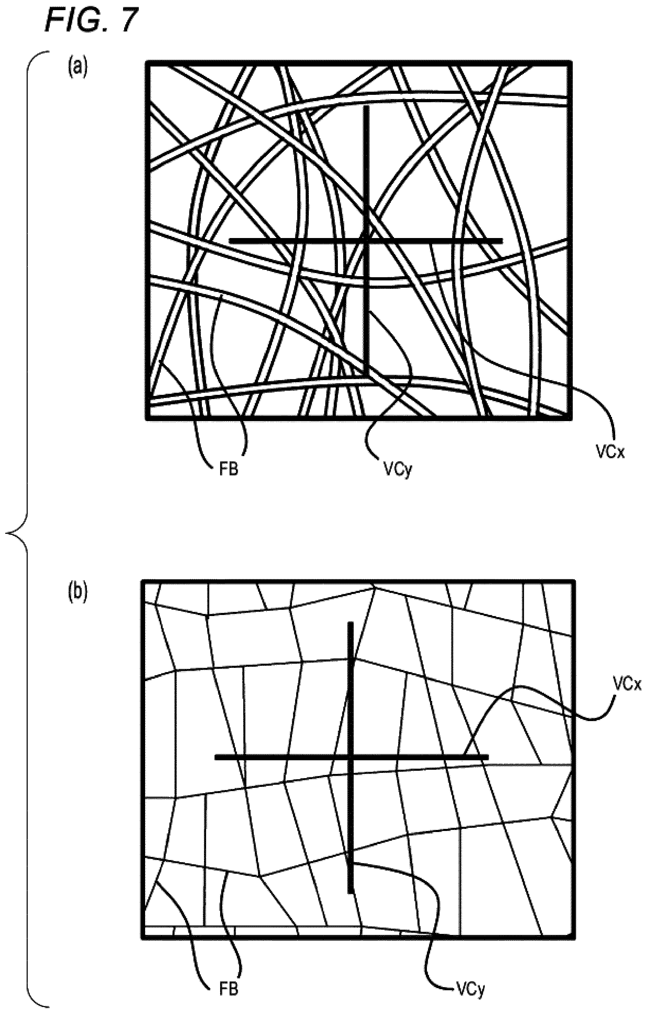

The preferential orientation may be determined by overlapping virtual cross lines including two X and Y axes on an acquired microscopic image and counting the number of intersections between each axis and the fibers. Fig. 7 illustrates an example of orientation confirmation by observing the base material. (a) of Fig. 7 is an example when the base material is a nonwoven fabric, and (b) of Fig. 7 is an example when the base material is made of a stretched porous PTFE. In (b) of Fig. 7, each fiber is illustrated as one solid line for simplification. The solid lines include, for example, nodes and fibrils.

In (a) of Fig. 7 and (b) of Fig. 7, virtual cross lines including an X-axis direction virtual line VCx and a Y-axis direction virtual line VCy are randomly arranged on a microscopic image including fibrous materials FB. The X-axis direction virtual line is a perpendicular bisector of the Y-axis direction virtual line, and vice versa. The axis direction virtual line and the Y-axis direction virtual line are line segments orthogonal to each other and having the same length. A length of the line segment may be determined according to an observation magnification and a density of the fibers, and may be, for example, 10 µm to 1000 µm.

Subsequently, intersections between the fibrous materials FB and the X-axis direction virtual line VCx and intersections between the fibrous materials FB and the Y-axis direction virtual line VCy are counted. For example, in the example illustrated in (a) of Fig. 7, the number of intersections between the fibrous materials FB and the X-axis direction virtual line is 7, and the number of intersections between the fibrous materials FB and the Y-axis direction virtual line is 4. Similarly, in the example illustrated in (b) of Fig. 7, the number of intersections between the fibrous materials FB and the X-axis direction virtual line is 7, and the number of intersections between the fibrous materials FB and the Y-axis direction virtual line is 5.

For example, assuming that a ratio of the number of intersections is the number of intersections between the fibrous materials and the X-axis direction virtual line/the number of intersections between the fibrous materials and the Y-axis direction virtual line, when the ratio of the number of intersections is 1.2 or more, it can be determined that the fibrous materials are preferentially oriented in a Y-axis direction as compared with an X-axis direction. Therefore, when the Y-axis direction virtual line is parallel to the first direction of the tube, and the X-axis direction virtual line is parallel to the circumferential direction of the tube on an observation image of the tube 20, and when the ratio of the number of intersections represented described above is 1.2 or more, the fibrous materials can be considered to be preferentially oriented in a direction along the first direction as compared with a direction along the circumferential direction.

The ratio of the number of intersections is preferably 1.4 or more, and particularly preferably 1.6 or more. When there is a large variation depending on observation positions, the observation may be performed until the total number of fields of view is 6 or more and the total number of intersections in both directions is 120 or more, and a preferential orientation may be determined based on an average value of the ratio of the number of intersections calculated in each field of view.

### (Resin)

The resin material forming the first resin layer and/or the second resin layer formed between the base material layers is preferably a thermosetting resin from the viewpoint of the mechanical characteristic or the chemical stability. The thermosetting resin referred to in the present invention is a natural or synthetic resin exhibiting rubber elasticity, and is also referred to as a rubber or an elastomer. The thermosetting resin exhibits the rubber elasticity when a crosslinking reaction occurs through a heat treatment, an electron beam treatment, or the like. Alternatively, there is a thermoplastic elastomer exhibiting a rubber elasticity by forming a block copolymer having both a crystalline portion and an amorphous portion, and the thermoplastic elastomer can also be used in the present invention.

The thermosetting resin used for practical purposes after curing has a network structure, restricts a free movement of molecular chains, and has stable physical properties. Therefore, the thermosetting resin is suitable as the first resin and/or the second resin.

Generally, the thermosetting resin and the thermoplastic resin can be distinguished from each other as follows. For example, a melting phenomenon observed in the thermoplastic resin is not recognized in the thermosetting resin. This can be determined based on the fact that no endothermic or exothermic peak associated with the melting phenomenon is observed when measured by a differential scanning calorimeter (DSC). Alternatively, when a dynamic elastic modulus is measured, a storage elastic modulus of the thermoplastic resin gradually decreases with a discontinuous change due to a glass transition phenomenon or the melting phenomenon with respect to temperature rise, whereas a storage elastic modulus of the thermosetting resin does not have a discontinuous change due to the melting phenomenon with respect to temperature rise and does not change so much, and thus the storage elastic modulus of the thermoplastic resin and the storage elastic modulus of the thermosetting resin can be distinguished from each other. In the tube according to the present embodiment, the first resin and/or the second resin may contain various additive components or may be made of a composite material. In this case, as long as a resin is thermally stable, and for example, the resin that satisfies the following requirements may be regarded as a thermosetting resin. Specifically, the thermosetting resin may have a requirement that a value obtained by dividing a logarithm of a storage elastic modulus (hereinafter, SM0) at a use temperature of 0°C with base 10 by a logarithm of a storage elastic modulus (hereinafter, SM200) at a use temperature of 200°C with base 10 is 2 or less (that is, Log 10 (SM0)/Log 10 (SM200) ≤ 2). The storage elastic modulus can be measured using a dynamic viscoelasticity measuring device (DMA) or the like, and a result with good reproducibility is obtained by measuring the storage elastic modulus while changing a temperature at a constant rate in a range of a strain of 1% to 5% and a frequency of 10 kHz to 1 MHz.

Examples of the thermosetting resin include diene rubber such as natural rubber, styrene butadiene rubber (SBR), isoprene rubber (IR), butadiene rubber (BR), chloroprene rubber (CR), and acrylonitrile-butadiene rubber (NBR), butyl rubber (isobutylene-isoprene rubber (IIR)), ethylene-propylene rubber (EPM), ethylene-propylene diene rubber (EPDM), urethane resin, silicone rubber, fluororubber (FKM), and perfluorofluorine rubber (FFKM). From the viewpoint of the chemical resistance, a chloroprene rubber (CR), an acrylonitrile-butadiene rubber (NBR), an ethylene-propylene-diene rubber (EPDM), an urethane resin, a silicone rubber, a fluororubber (FKM), and a perfluorofluorine rubber (FFKM) are preferred, from the viewpoint of workability at the time of manufacturing a tube, it is preferred to be a liquid at around room temperature, and an urethane resin, a silicone rubber, a silicone rubber containing fluorine element (fluorinated silicone rubber and polyfluoroether rubber), and a fluororubber (FKM) are particularly preferred.

Examples of the thermoplastic elastomer include olefin-based, styrene-based, polyester-based, polyamide-based, and polyurethane-based thermoplastic elastomers. These resins melt and liquefy at a high temperature, and thus at that time, the sheet-shaped base material can be impregnated with these resins.

A crosslinking system of the thermosetting resin is not particularly limited, but when molecules having a relatively large molecular weight are generated by the crosslinking reaction and released from the resin, it should be avoided that there remain the pores in the tube or the volume shrinkage increases. Preferred examples thereof include an addition reaction to a double bond using a radical generator, an addition reaction to a double bond by a hydrosilylation, and an addition reaction between an isocyanate and a hydroxyl group or an amino group. In addition, a crosslinking aid or a catalyst for promoting the crosslinking reaction can also be added.

In the present specification, the elastomer can be defined as, for example, one having a glass transition temperature Tg of 25°C or lower.

In order to improve the mechanical characteristic of the tube, the sheet-shaped base material is used in the present invention, and it is also possible to improve the mechanical characteristic by adding a filler to the thermosetting resin. Specific examples thereof include granular materials such as natural silica, synthetic silica, carbon black, white carbon, magnesium carbonate, spherical glass beads, natural or synthetic mica, and talc. Depending on the purpose, the filler can be added in an amount of about 0.1 % to 30% by weight with respect to the resin. Further, various colorants, pigments, dyes, and various stabilizers can also be added. Specific examples thereof include an oxidation stabilizer, a UV absorber, a flame retardant, an antibacterial agent, an anti-aging agent, an anti-ozone deterioration agent, an anti-scorch agent, a rubber softener, an anti-bubble agent, an antistatic agent, a lubricant, and a tackifier. An amount of filler added may be different between the inner layer and the outer layer. The amount of filler added to the inner layer located closer to the flow path than the outer layer is smaller than an amount of filler added to the second layer, and thus the fluid to be transported can be prevented from being contaminated.

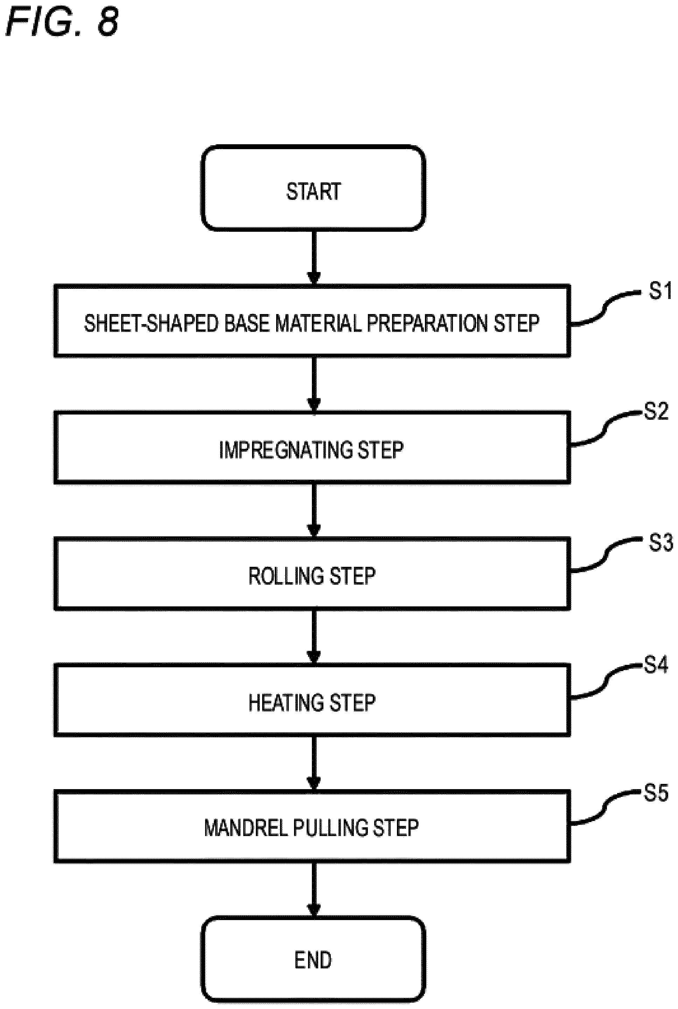

Next, an example of a method for manufacturing a tube according to the embodiment will be described with reference to Fig. 8. Hereinafter, as a preferred embodiment, the method for manufacturing a tube in which both an inner layer and an outer layer have a porous base material will be mainly described.

### (Sheet-shaped Base Material Preparation Step: S1)

First, a sheet-shaped base material is prepared. In the step, if the resin forming the base material is a thermoplastic resin, a fibrous material may be manufactured in advance by melt extrusion or the like, and the fibrous material can be made into a woven fabric using various looms. At the time of manufacturing the fiber, stretching can be performed for the purpose of improving the mechanical characteristic, a so-called modified cross-section yarn which is not circular can be used for improving the interaction at an interface with the thermosetting resin to be described later, and further, a composite yarn using two or more different materials can be used. The woven fabric can be manufactured using any of a shuttleless loom and a shuttle loom, and examples of the shuttleless loom include a gripper loom, a rapier loom, a water jet loom, and an air jet loom. A wire having a yarn diameter of 1 µm to 1000 µm is formed into a woven fabric by various weaving methods with an opening of 1 µm to 5000 µm to obtain a sheet-shaped base material.

If the sheet-shaped base material is a nonwoven fabric, the sheet-shaped base material can be obtained by forming randomly dispersed fibers into a sheet. Specifically, in addition to a dry method such as a dry method, a melt-blown method, and a spunbond method, an airlaid method or an electrospinning method can be used. Among them, the electrospinning method is useful as a method that can be applied to PTFE to be described later to form fine pores.

PTFE and a part of the fluororesin do not substantially exhibit a characteristic of the thermoplastic resin, and it is difficult to obtain a molded article by melt extrusion. In this case, a lubricating solvent (in the present embodiment, solvent naphtha) is mixed with PTFE powders, a preformed molded article is made of the mixture, the preformed molded article is formed into a sheet shape by performing paste extrusion, and a sheet-shaped base material having fine pores can be prepared by drying and removing the lubricating solvent in a heated oven and then performing a stretch treatment. By heating the obtained sheet-shaped base material at a temperature equal to or higher than a melting point of PTFE, it is possible to obtain a sheet-shaped base material that does not change in size even at a high temperature.

The stretch treatment is performed in either an extruded direction by the paste extrusion or a width direction of a sheet perpendicular to the extruded direction, or both directions. A ribbon can be obtained by performing the stretch treatment in only one direction and slitting parallel to the direction, and a PTFE woven fabric with excellent mechanical characteristic can be obtained by subjecting the ribbon to, for example, a twisting treatment and then making the same into a woven fabric.

A porous structure of a stretched porous sheet subjected to the stretch treatment is defined by the porosity and a pore size. In the present invention, the porosity is preferably 50% or more and 95% or less. The porosity is more preferably 60% or more and 90% or less. The most preferable range is 65% or more and 85% or less. This is because a thermosetting resin component before crosslinking having viscosity with respect to a pore portion has the impregnating property, and when the porosity is 50% or less, the impregnation takes time and the impregnating property is a factor of uneven impregnation. In addition, when the porosity is 95% or more, the deformation is likely to occur in maintaining the shape during processing, and it is difficult to maintain an industrial quality. The above-described porosity is calculated based on the density.

The pore size is measured by a fine pore diameter distribution measuring apparatus, that is, a perm porometer (POLROLUX 1000 manufactured by IB-FT GmbH). GALPORE125 is used as a measurement solution. In the measurement by the perm porometer, an air pressure is applied to a punched sample (ϕ25 mm, measurement area: about (ϕ16 mm2) immersed in the measurement solution, a flow rate of air in a wet state and a flow rate of air in a dry state are measured, and an average pore diameter is confirmed. The measurement of the pore size of the stretched porous sheet has been described above, and the pore size of other sheet-shaped base materials, that is, those formed in a mesh shape, a nonwoven fabric shape, or a woven fabric shape can also be measured by using the above-described measuring method.

In this way, a sheet-shaped porous base material having micropores is prepared.

An example of preferred base materials is a thin film-shaped sheet made of polytetrafluoroethylene (PTFE). Such a sheet, including stretched sheets, can be purchased commercially. As such a commercially available sheet, (for example, Y product manufactured by X company) or the like is available.

Alternatively, such a sheet may be prepared using the following procedure based on well-known techniques such as JPS56-045773B, JPS58-18991B, and JPS56-45773B.

First, 19 parts by mass of an auxiliary agent (Isopar H manufactured by Exxon Mobil Corporation) are mixed with 100 parts by mass of PTFE fine powders (POLYFLON PTFE F-106 manufactured by Daikin Industries, Ltd.) in a polyethylene container, and the mixture is put into a preformed molding machine to prepare a preformed molded body. Next, the preformed molded body is put into an extruder, extruded by a cylinder extruder, and formed into a tape shape. The tape is rolled to a desired thickness using a metal roll, and then the tape is heated to sufficiently dry the Isopar H. Next, the dried tape is stretched in the longitudinal direction at a desired magnification while being heated to 280°C, and then the obtained stretched PTFE is subjected to a heat treatment at 350°C to obtain a biaxially stretched PTFE tape having a film thickness of 50 µm.

For example, by providing a difference such as N (N ≠ 1): 1 between an X direction and a Y direction in the magnification at the time of stretching, the anisotropy of the tensile elastic modulus corresponding to the difference can be imparted.

### (Impregnating Step: S2)

Next, a resin layer is formed on a surface of the prepared base material. The resin layer is formed between the base materials in a state capable of holding the base materials, for example, like the first resin layer IMR1 or the second resin layer IMR2 in Fig. 5, when the tube is formed. The resin layer is preferably a thermosetting resin, a thermosetting resin layer can be formed on a surface of the porous base material, and the thermosetting resin can enter the micropores of the porous base material. In this step, it is important to obtain a resin layer-forming base material having a high micropore filling property and a uniform thickness. In a method for manufacturing the impregnated base material obtained in this step, the thermosetting resin before curing is fluidized and applied to the base material in a fluidized state, and the thermosetting resin is passed through a certain gap such as two rolls, so that the thermosetting resin can be sufficiently pushed into the pores and a thickness can be made uniform. Alternatively, it is also possible to form the thermosetting resin into a sheet shape in advance and press the thermosetting resin together with the sheet-shaped base material. In addition, as long as the thermosetting resin has a viscosity of about 100 Pa s or less, the thermosetting resin can be applied to the sheet-shaped base material using a normal coating machine. Examples of the coating method include curtain coating, spray coating, roll coating, dip coating, blade coating, and bar coating. The blade coating or the bar coating is preferred in order to completely fill the pores of the sheet-shaped base material.

In preparing the resin layer-forming base material for constituting the first layer and the resin layer-forming base material for constituting the second layer, a single base material may be switched to a different thermosetting resin during the impregnating step, or one or two types of base materials which respectively contain different thermosetting resins may be prepared.

In addition, the thickness of the thermosetting resin is larger than that of the resin layer-forming base material, there may be a part of the resin layer-forming base material as a single thermosetting resin in the radial direction, but when there is only the base material as a single body in the radial direction, sufficient adhesion cannot be secured in the subsequent rolling step, and thus it should be avoided that there is only the base material as a single body in the radial direction. In a stacked body such as the tube according to the present invention, the thickness of the resin layer-forming base material is 10 µm to 2 mm, preferably 25 µm to 1 mm, and more preferably 50 µm to 0.5 mm, depending on the manufacturing method, from the viewpoint of workability. The thickness of the thermosetting resin present as a single body is preferably 50% or less, and more preferably 40% or less of a layer thickness.

In this way, a sheet-shaped base material having the resin layer formed in the micropores and on the base material surface can be obtained.

### (Rolling Step: S3)

Next, the resin layer-forming base material subjected to the impregnating step is wound around the mandrel (core rod) having a cross-sectional shape corresponding to a flow path shape. For example, the impregnated sheet-shaped member may be continuously wound obliquely in a movement direction of the core rod as the core rod is fed out, thereby allowing continuous production.

Alternatively, the impregnated sheet-shaped member may be wound without moving in a longitudinal direction of the core rod. In the winding method, a winding direction of the base material is defined in a plane perpendicular to an extending direction of the core rod. In the winding method, the maximum tube length that can be set is limited by a length of the core rod and a width of the base material, but it is possible to obtain a winding structure with small variations in diameter and characteristic. The first layer and the second layer of the main body portion of the tube can be formed by preparing two kinds of resin layer-forming base materials having different base materials and/or impregnation resins in advance, winding and stacking the resin layer-forming base material serving as the first layer, and winding and stacking the resin layer-forming base material serving as the second layer thereon.

When the resin layer-forming base material has anisotropy that a tensile elastic modulus in a certain direction is larger than a tensile elastic in other directions, and when the resin layer-forming base material is wound around the mandrel such that the certain direction and an axis direction of the mandrel are perpendicular to each other to form a specific layer (inner layer or outer layer), a tube including a layer in which the tensile elastic modulus in the circumferential direction is larger than the tensile elastic modulus in the first direction can be obtained. When the same resin layer-forming base material is wound around the mandrel such that the certain direction (direction in which the tensile elastic modulus of the resin layer-forming base material is relatively large) and the axis direction of the mandrel are parallel to each other to form a specific layer (inner layer or outer layer), a tube including a layer in which the tensile elastic modulus in the circumferential direction is smaller than the tensile elastic modulus in the first direction can be obtained.

### (Heating Step: S4)

Next, the resin layer-forming base material stacked on the mandrel in the rolling step is cured. For example, the resin layer-forming base material can be cured by being placed in a mold that defines an outer shape of the tube and heated. The heating is performed to promote and complete the crosslinking reaction of the thermosetting resin.

### (Mandrel Pulling Step: S5)

Thereafter, the mandrel is pulled out from the tube. The tube is completed through the above-described steps.

### (Measuring Method)

Next, a tube measuring method according to the invention will be described.

First, an example of the measuring method will be described in which a difference in elastic modulus can be clarified and the reproducibility is ensured even in the case of a micro sample or a sample having a small elastic modulus in which the measurement with high reproducibility is difficult in the Japanese Industrial Standards and the like to be described later in the preparation of a test piece to be used for measurement.

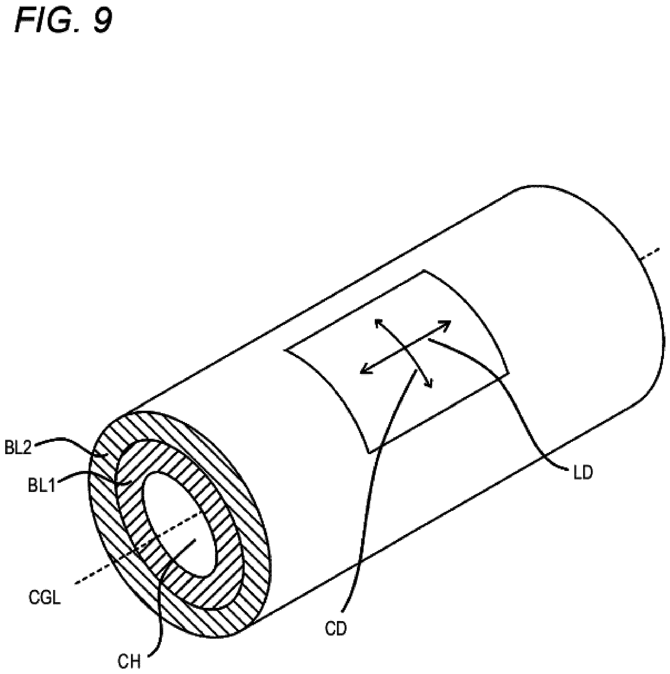

Fig. 9 is a diagram illustrating a method for preparing the test piece, and is a perspective view schematically illustrating the tube.

As illustrated in Fig. 9, the longitudinal direction of the tube is referred to as LD, and the circumferential direction of the tube is referred to as CD.

First, a sheet-shaped sample having a uniform thickness (size in the radial direction) along the circumferential direction of the tube is cut out from the tube by using a method such as cutting, peeling, or cutting.

Specifically, first, the tube is cut short to match a desired size of the test piece. In this case, a tube piece is cut to have a cross section perpendicular to the longitudinal direction of the tube.

Next, a slit is made parallel to the longitudinal direction LD from one end to the other end of the cut tube piece and is made into a sheet shape. In this case, when the diameter of the tube is small, the tube may be expanded into one sheet by making a slit at one position of the tube in order to obtain a test piece of a desired size, and when the diameter of the tube is large, the tube may be divided into two equal parts by making a slit parallel to the longitudinal direction LD so as to pass through the center CGL of the tube.

Next, the first layer (corresponding to the inner layer of the embodiment described above) and the second layer (corresponding to the outer layer of the embodiment described above) are peeled off from the sheet-shaped material. In order to perform a tensile test in the longitudinal direction or the circumferential direction of the tube, a test piece corresponding to the longitudinal direction LD or the circumferential direction CD of the tube is cut out from each of the peeled first layer and second layer. In the cut test piece, a direction extending in a tensile direction of the tensile test is defined as a long side of the test piece, and a length of the long side of the test piece is preferably 10 mm or more. On the other hand, a short side of the test piece is, for example, 5 mm or more and 15 mm or less in a range not longer than the long side, and it is important that the curvature remaining in the test piece is not relatively too large. The long side and the short side of the test piece may be appropriately adjusted according to the diameter of the original tube as necessary. For example, an extended length (length along the short side) of the short side of the test piece is set to a range not exceeding 50% of an original circumferential length (length in the circumferential direction when the test piece is in the tube state) at the maximum. Thus, a vertex angle of the test piece when viewed from the first direction and viewed as a fan shape does not exceed 180 degrees.

Next, a method for measuring a tensile elastic modulus will be described.

The tensile elastic modulus in the first direction (longitudinal direction LD in Fig. 9) and the tensile elastic modulus in the circumferential direction (circumferential direction CD in Fig. 9) are measured in accordance with ASTM D412 (JIS K 6251, ISO 37) except for the shape and size of the test piece. Typical conditions are an initial distance between chucks of 10 mm ± 0.5 mm, a tensile speed of 500 ± 50 mm/min, and a test temperature of 23°C ± 2°C. In addition, the measurement can be performed using the test piece cut out from the tube according to the present invention. The number of test pieces is 6 or more, and the measurement result is an average value of measurement results obtained from the respective test pieces. In addition, in a case in which a test piece to be described later is chucked and subjected to a tensile test in a chuck portion of a tensile tester, when the chucked test piece is damaged by the pressing of the chuck portion, the test is performed after avoiding the damage by fastening a rubber sheet between the chuck portion and the test piece. When the test piece has a multilayer structure in which a plurality of base material layers are stacked in the same layer, the sheet-shaped sample is preferably prepared such that five or more base material layers are included. The test piece preferably has a thickness (size in the radial direction) of 0.3 mm to 1 mm, a length of long sides of 20 mm or more, and a length of short sides of 5 mm or more. Here, the test piece is cut out such that the long side of the test piece is in the circumferential direction of the tube.

The test piece is chucked in the tensile tester in which a distance between chucks is set to 10 mm so that the test piece does not bend as much as possible, and then a load in a predetermined strain state is acquired. Here, the strain refers to one obtained by dividing the initial distance between chucks by a chuck movement distance. In addition, the elastic modulus can be obtained based on a tangent line of a curve created by a tensile strength and the strain. For comparison of the tensile elastic modulus, it is preferred to apply an elastic modulus in a region in which each strain is 40% to 60% among the obtained elastic modulus.

Next, a method for measuring a bending elastic modulus will be described.

The bending elastic modulus can be measured using a test piece partially cut out from the tube. The bending elastic modulus of the cut test piece can be obtained, for example, by using a method defined in a plastic bending stiffness test method defined in the Japanese Industrial Standard and JIS K 7106 using a cantilever beam.

Depending on the tube diameter and the elastic modulus of the material, it may be difficult to measure with high reproducibility by using the method defined in the Japanese Industrial Standard. In such a case, for example, after a characteristic value corresponding to the elastic modulus is acquired in the following form, the value can be used as the bending elastic modulus directly or after performing a necessary calculation.

In this case, it is important to match the comparison targets with the measuring method and a calculation method. For example, when the magnitude of the bending elastic modulus of the first layer and the magnitude of the bending elastic modulus of the second layer are to be compared with each other, it should be noted that a relative relation between the values of the bending elastic modulus is not reversed due to a difference in measuring methods.

In addition, it is desirable to align the shapes of the test pieces as much as possible.

A compress test machine used for measurement includes a fixed stage and a moving stage, each having parallel surfaces facing each other. The moving stage is movable relative to the fixed stage, and at least one of the stages has a load cell and can measure a minute change in stress applied to the stage.

After the test piece lightly folded in half along a perpendicular bisector of the short side is disposed between the stages of the compress test machine, the movable stage is moved at a speed of about 5 mm/min in a direction approaching the fixed stage, and a gap between the stages is adjusted to be twice the thickness of the test piece. This state is close to a tube shape when the test piece is completely squeezed by the roller of the peristaltic pump, and the test piece is folded in half until it becomes flat. Since keeping in this state for a long time may cause a reverse shape change, it is preferred to start an operation of enlarging a gap between the next stages within 3 seconds.

In the operation of enlarging the gap, the movable stage is moved at a speed of about 5 mm/min in a direction away from the fixed stage. With the enlargement, the test piece is deformed in a direction approaching an original shape. The gap between the stages after the enlargement is four times the thickness of the test piece as one example. In some cases, such as when the test piece is largely curved, the long sides may remain in contact with each other in this gap. In such a case, a distance at which the long sides including the comparison targets are reliably separated from each other is determined, and the distance is set as the gap after the enlargement. However, when the distance is too large, a measurement value becomes small, and it is difficult to perform accurate measurement depending on the test piece, and thus it is preferred to apply the smallest possible value as a set value among distances at which the long sides are reliably separated from each other.

After the gap is enlarged to a predetermined distance, a load cell indication value after one minute has elapsed is acquired. The reason for waiting for one minute is to relieve a repulsive force of the tube. The strain can be obtained by dividing the obtained indication value by a cross-sectional area of the test piece, that is, a product of the thickness and the long side length of the test piece, and the elastic modulus can be obtained using the strain. The measurement is preferably performed in a temperature-controlled environment, preferably an environment of 23°C ± 2°C.

In the test, a plurality of test pieces may be cut out from different positions in the same layer and compared with each other with an average value thereof. The number n per level is preferably 6 or more, and may be further increased to such an extent that a relative magnitude relation can be clarified as necessary. The effectiveness of acquiring the elastic modulus based on the average value of the plurality of test pieces and comparing the elastic modulus is the same for the following measurement.

When the test piece has a curvature even in an unloaded state, it is preferred that a direction in which the operation of the peristaltic pump is reproduced, that is, a side that becomes a peak at the time of folding in half is an outer peripheral side of the curvature. If the determination is made by comparing the average values using a plurality of acquired values, it is also possible to bend a part of the test piece in a direction opposite to the above for measurement. In this way, it is possible to alleviate the influence on a measurement result caused by an inherent curvature of the test piece.

When a desired comparison accuracy of the bending elastic modulus in the circumferential direction cannot be obtained by using the above-described method due to a size of the sample or a range of the elastic modulus, a comparison using another measuring method is also proposed. For example, if the extending direction of the base material in the layer is the circumferential direction in both levels to be compared, a comparison result of the compressive elastic modulus in the direction perpendicular to the extending direction of the base material, that is, in the radial direction may be applied. This is because, under a condition that the elastic modulus of the resin layer between the base materials is strongly reflected, a relative relation of the compressive elasticity matches a relative relation of the bending elasticity.

Similarly, when the base material in the layer extends in both the circumferential direction and the first direction in each layer in both levels to be compared, a comparison using the bending elastic modulus in the first direction is also proposed. The bending elastic modulus in the first direction can be obtained by bending the test piece in a direction in which the sides parallel to the circumferential direction are brought into contact with each other. When the test piece has a curved shape similar to the tube shape, the elastic modulus is obtained by bending the test piece in a direction perpendicular to the curved shape of the test piece, and thus it should be noted that the change in elastic modulus due to the shape effect of the test piece is not dominant. The influence of the shape effect can be reduced by, for example, comparing samples with similar curved shapes to the original tube and reducing a length of the sides parallel to the circumferential direction.

The compressive elastic modulus in the radial direction can be measured as follows. The test piece is prepared by cutting out a part of the tube as described above. When the test piece is cut out from the tube, a test piece having a strip shape, that is, a rectangular parallelepiped shape may be cut out regardless of the curvature of the tube itself, or the test piece along the circumferential direction, that is, the test piece immediately after being cut out may be cut out into a curved shape derived from the tube shape. Alternatively, the test piece can also be prepared by peeling off a part of the layer starting from the cut.

In order to achieve the measurement with high reproducibility, the thickness (size in the radial direction) of the test piece is preferably 1 mm or more, depending on the sensitivity of the measuring device and the elastic modulus of a target to be measured. The shape and size of the test piece when viewed from the radial direction are not limited, but a rectangle in which the length of one side is secured twice or more the thickness is exemplified. For example, the length of one side of the test piece can be about 10 mm. In the case in which the test piece has a curved shape derived from the tube shape, when the test piece is placed on a measurement stage, a part of the test piece is floated, and the reproducibility may decrease, and thus in particular, the length in the circumferential direction is preferably not be made larger than necessary.

In the measurement, when a probe of the compress test machine has a separation region in a part of a compression region due to probe floating (or test piece floating) due to the curvature of the test piece, the probe is selected and the orientation of the test piece placement and the like are adjusted so as to minimize an area of the compression region. In addition, when there remains the separation region, it is also preferred to adjust a separation distance so as not to exceed 10% of the thickness of the test piece. In the compression test, the elastic modulus can be obtained by obtaining a load in a predetermined strain state and performing a predetermined calculation such as dividing the value of the load by the area of the compression region.

### (Examples)

The following tubes were prepared, and the durability improvement was verified.

First, two types of base materials having or not having anisotropy were prepared. The base materials are thin film-shaped sheets made of polytetrafluoroethylene (PTFE) and made porous by stretching. The anisotropy of the tensile elastic modulus is imparted to the base material having anisotropy due to a difference in the stretching magnification.

A perfluoropolyether elastomer (grade: SIFEL3590-N manufactured by Shin-Etsu Chemical Co., Ltd.) was prepared as the first resin forming the first resin layer of the inner layer, and a thermosetting silicone elastomer (grade: KE-1886 manufactured by Shin-Etsu Chemical Co., Ltd.) having a lower elastic modulus than the thermosetting silicone elastomer was prepared as the second resin forming the second resin layer of the outer layer.

Four types of resin layer-forming base materials in total were prepared by impregnating two types of base materials having or not having anisotropy with the two types of resins. After the resin layer-forming base materials were thermally cured under the same conditions as the tube formation, the tensile elastic modulus was measured, and in the resin layer-forming base material to which the base material not having anisotropy was applied, no remarkable anisotropy was confirmed, and a ratio of the magnitude of the tensile elastic modulus depending on the direction was 1: about 1. In the resin-forming base material to which the base material having anisotropy was applied, the anisotropy of the tensile elastic modulus in the same direction as the base material was confirmed. The ratio of the magnitude of the tensile elastic modulus depending on the direction was 1: about 5.

The resin layer-forming base material to which the first resin was applied was wound around the mandrel until the number of stacked layers (the number of windings) reached 13. Next, the resin layer-forming base material to which the second resin was applied was wound around the wound resin layer-forming base material to which the first resin was applied until the number of stacked layers (the number of windings) reached 13.

Next, the mandrel wound up to the resin layer-forming base material of the second resin was put into a warm air circulation type oven set at 190°C to 200°C for 4 hours to cure the first resin and the second resin simultaneously. After the first resin and the second resin were cured, a tube including an inner layer containing the first resin and an outer layer containing the second resin was obtained by pulling out the mandrel. The tube had an inner diameter of the tube of 6.4 mm, a thickness of a main body portion of the tube of 2.4 mm, and an outer diameter of the tube of 11.2 mm.

Four types of tubes were prepared by combining the four types of resin layer-forming base materials as follows.
(Sample 1)
   Inner layer: anisotropy (tensile elastic modulus in first direction > tensile elastic modulus in circumferential direction)
   Outer layer: anisotropy (tensile elastic modulus in first direction > tensile elastic modulus in circumferential direction)
(Sample 2)
   Inner layer: anisotropy (tensile elastic modulus in first direction > tensile elastic modulus in circumferential direction)
   Outer layer: no anisotropy
(Sample 3)
   Inner layer: no anisotropy
   Outer layer: anisotropy (tensile elastic modulus in first direction > tensile elastic modulus in circumferential direction)
(Sample 4)
   Inner layer: no anisotropy
   Outer layer: no anisotropy

A durability test was performed using the four types of samples. The tubes were applied to a Watson-Marlowe (Model 520) peristaltic pump (head used is 520REM), which preforms pumping at a speed of 160 rpm, and water at 25°C was transported. The number of rotations of the roller required for the flow rate to decrease to 90% or less of an initial flow rate was measured, and the results were about 2.5 million times for Sample 1, about 4 million times for Sample 2, about 1 million times for Sample 3, and about 1 million times for Sample 4. Although it was confirmed that all of the samples had high durability, in a tube in which the elastic modulus ratio R1 of the inner layer was larger than 1, that is, in Sample 1 and Sample 2 in which the inner layer had anisotropy of the tensile elastic modulus in the first direction > the tensile elastic modulus in the circumferential direction, a long life of twice or more that of the other tubes was confirmed, and it was confirmed that the tube had extremely high durability.

In addition, it was confirmed that the tube of Sample 2 in which the elastic modulus ratio R2 of the outer layer was smaller than the elastic modulus ratio R1 of the inner layer had particularly high durability.

### REFERENCE SIGNS LIST

20: tube
BD: main body portion
BL1: inner layer (first layer)
BL2: outer layer (second layer)
CH: flow path
CG: center
20a: inner peripheral surface
20b: outer peripheral surface
CB: case
HD: head
PMB 1: first base material layer
IMR1: first resin layer
FB: fibrous material

## Claims

1. A tube to be used for a pump that transports a fluid by peristalsis, the tube comprising: a flow path that serves as a transport path of the fluid and extends in a first direction; and a main body portion formed around the flow path, wherein
the main body portion comprises a first layer formed on the flow path and a second layer having a characteristic different from that of the first layer and formed on the first layer, and
when an elastic modulus ratio R1 of the first layer is defined as a tensile elastic modulus of the first layer in the first direction / a tensile elastic modulus of the first layer in a circumferential direction, the elastic modulus ratio R1 is larger than 1.

2. The tube according to claim 1, wherein the elastic modulus ratio R1 is larger than 1.2.

3. The tube according to claim 1 or 2, wherein the elastic modulus ratio R1 is larger than 2.

4. The tube according to any one of claims 1 to 3, wherein
when an elastic modulus ratio R2 of the second layer is defined as a tensile elastic modulus of the second layer in the first direction / a tensile elastic modulus of the second layer in the circumferential direction, the elastic modulus ratio R2 is smaller than the elastic modulus ratio R1 of the first layer.

5. The tube according to claim 4, wherein the elastic modulus ratio R2 of the second layer is smaller than 1.

6. The tube according to claim 5, wherein the elastic modulus ratio R2 of the second layer is smaller than 0.9.

7. The tube according to any one of claims 1 to 6, wherein
the first layer comprises a first porous base material having a plurality of micropores and a first resin entering the plurality of micropores of the first porous base material,
the first layer includes a stacked structure in which a plurality of the first porous base materials are stacked, and
the plurality of the first porous base materials extend in the circumferential direction of the main body portion in a cross section perpendicular to the first direction.

8. The tube according to any one of claims 1 to 7, wherein
the second layer comprises a second porous base material having a plurality of micropores and a second resin entering the plurality of micropores of the second porous base material,
the second layer includes a stacked structure in which a plurality of the second porous base materials are stacked, and
the plurality of the second porous base materials extend in the circumferential direction of the main body portion in a cross section perpendicular to the first direction.

9. The tube according to any one of claims 1 to 8, wherein the first layer contains a first resin, and the first resin is a thermosetting resin.

10. The tube according to any one of claims 1 to 9, wherein a bending elastic modulus of the second layer in a radial direction is smaller than a bending elastic modulus of the first layer in the radial direction.

11. The tube according to any one of claims 1 to 4, wherein
the first layer comprises a first porous base material having a plurality of micropores and a first resin entering the plurality of micropores of the first porous base material,
the second layer comprises a second porous base material having a plurality of micropores and a second resin entering the plurality of micropores of the second porous base material, and
a size, in a radial direction, of a region formed of the first porous base material and the first resin is smaller than a size, in the radial direction, of a region formed of the second porous base material and the second resin.

12. The tube according to claim 11, wherein
an average distance between base materials of the region formed of the second porous base material and the second resin is larger than an average distance between base materials of the region formed of the first porous base material and the first resin.

13. A tube to be used for a pump that transports a fluid by peristalsis, the tube comprising: a flow path that serves as a transport path of the fluid and extends in a first direction; and a main body portion formed around the flow path, wherein
the main body portion comprises a first layer formed on the flow path and a second layer having a characteristic different from that of the first layer and formed on the first layer, and
the first layer comprises a plurality of yarn fibrous materials, and the plurality of yarn fibrous materials of the first layer are preferentially oriented in a direction along the first direction as compared with a direction along the circumferential direction.

14. A peristaltic pump comprising: the tube according to any one of claims 1 to 13; and a head and a case capable of closing an internal space of the tube by squeezing the tube.

15. A fluid transport method comprising:
preparing a peristaltic pump including the tube according to any one of claims 1 to 13 and a head and a case capable of closing an internal space of the tube by squeezing the tube; and
transporting a fluid in the flow path of the tube by moving a position at which the internal space of the tube is closed along the first direction of the tube.
